# EUROPÄISCHE PATENTSCHRIFT

(11) **EP 1 701 140 B1**
(45) Veröffentlichungstag und Bekanntmachung des Hinweises auf die Patenterteilung: **10.10.2012**
(21) Anmeldenummer: 05005381.8
(22) Anmeldetag: 11.03.2005
(51) Int. Cl.: G01F 1/66

(54) **Ultraschallmesskanal**
Ultrasonic measuring channel
Canal de mesure ultrasonique

(43) Veröffentlichungstag der Anmeldung: 13.09.2006
(73) Patentinhaber: Landis+Gyr GmbH, 90459 Nürnberg (DE)
(72) Erfinder: Reissinger, Achim, 91522 Ansbach (DE)
(74) Vertreter: Bauerschmidt, Peter

(56) Entgegenhaltungen:
- EP-A- 1 493 998
- DE-A1- 3 622 553
- US-A- 4 336 719
- US-B1- 6 539 812

## Beschreibung

Die Erfindung bezieht sich auf einen Ultraschallmesskanal zur Durchflussmessung eines strömenden Mediums in einer Rohrleitung, wobei die Fliessgeschwindigkeit des Mediums nach dem Prinzip der Laufzeitdifferenzmessung durch innerhalb des Mediums reflektierte Ultraschallwellen erfassbar ist.

Stand der Technik

Allen bekannten Ultraschallmesskanälen liegt die gemeinsame Aufgabe zugrunde, dass in ihnen möglichst verlustfrei hochfrequente akustische Signale, vorzugsweise Ultraschallsignale, in ein zu untersuchendes Medium eingekoppelt werden können, um zumeist nach dem Prinzip der Laufzeitdifferenzmessung (Mitnahmeeffekt) die Laufzeit von innerhalb des Mediums reflektierten Ultraschallwellen zu erfassen. Aus der Laufzeitdifferenz der mit dem bzw. gegen das Medium ausgesandten Ultraschallsignale kann dann die Fliessgeschwindigkeit des Mediums selbst ermittelt werden.

Im Messkanal einer Ultraschallmessanordnung wird das durchfliessende Medium unter Berücksichtigung seines Strömungsverhaltens integrierend erfasst, d. h. die über den gesamten Querschnitt des Messkanals variable Strömungsgeschwindigkeit des Volumenstroms wird durch einen geeigneten Messaufbau summarisch erfasst und gemittelt (Integralmittelwert).

Diese "integrierende Erfassung des gesamten Volumenstroms" wird gegenwärtig über die möglichst vollständige Erfassung des vom Ultraschallsender abgegebenen Schallfeldes unter Ausnutzung der Reflexionseigenschaften an Grenzschichten oder über die Erzeugung nahezu ebener Wellen und Absorption aller störenden Wellenzüge erreicht. Bei der letzteren Lösung ist bislang die Verwendung von unterschiedlichen Materialien für die Funktionalitäten der Absorption und Reflexion an den das strömende Medium begrenzenden Messkanalwänden zwingend.

Ultraschall-Durchflussmesser sind aus JP-A-11 281 424 und WO-A-02/45074 bekannt.

Die Messung mittels Ultraschall geniesst wegen ihrer Genauigkeit und der geringen Messdauer eine besondere Stellung im. Bereich der Durchflussmessverfahren, zu denen beispielsweise auch die Durchflussmessung nach dem Flügelradprinzip gehört. Da üblicherweise Ultraschallmessanordnungen unter Berücksichtigung zweier Funktionsüberprüfungen bis zu 15 Jahre im Einsatz verbleiben, muss die Messgenauigkeit langzeitstabil gewährleistet werden. Alterung und/oder Verschmutzung der gesamten Ultraschallmessanordnung dürfen die Messgenauigkeit nicht über zulässige, genormte Toleranzgrenzen hinweg beeinflussen. Grundsätzlich ist heute die Alterung der verwendeten Messstreckenelemente vergleichsweise einfach in den Griff zu bekommen, da die Temperaturbelastung und die Druckbelastung der Messstrecke bestens bekannt sind und eine entsprechende Auslegung aller Komponenten vorgenommen werden kann.

Hingegen hat sich gezeigt, dass nicht nur Flügelraddurchflussmesser sondern auch Ultraschalldurchflussmesser auf Verschmutzung durch das sie umströmende bzw. durchströmende Medium empfindlich reagieren können. Dabei kann die Verschmutzung ihren Einfluss geltend machen, wenn nur einzelne Komponenten oder aber die gesamte Messstrecke betroffen sind. Folgende Verschmutzungsphänomene sind hier einschlägig: 1.) Die Physikalische Verschmutzung, bei der sich vergleichsweise "schwere" Schwebeteilchen des Mediums aufgrund ihres Gewichts entlang der Messstrecke anlagern, 2.) die elektrostatische Verschmutzung, bei der sich kleinste Schwebeteilchen des Mediums aufgrund von Coulomb-Kräften oder van-der-Waals-Kräften entlang der Messstrecke anlagern, und 3.) die chemische Verschmutzung, bei der Teilchen aufgrund von Redoxreaktionen chemische Bindungen entlang der Messstrecke eingehen.

Diese Verschmutzungsphänomene können ohne weiteres während der Einsatzdauer eines Durchflussmessers zu einer Verschmutzungsschicht mit einer Dicke von 50 µm und mehr führen. Dabei können solche Verschmutzungsschichten in Verbindung mit Ultraschallsignalen ein diffuses, nicht kontrollierbares Verhalten dieser Ultraschallsignale hervorrufen, so dass die ansonsten als hochgenau bekannte Messung mittels Ultraschall ihre herausragende Stellung einbüssen kann.

Darstellung der Erfindung

Der Erfindung liegt die Aufgabe zugrunde, einen Ultraschallmesskanal der vorstehend genannten Gattung derart weiterzubilden, dass er resistent gegenüber den aufgezeigten Verschmutzungsphänomenen durch Schwebeteilchen im strömenden Medium ist und dass eine genauere Messung ermöglicht wird.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche.

Erfindungsgemäss ist ein Ultraschallmesskanal nach den Merkmalen des Anspruches 1 derart ausgebildet, dass die Oberfläche des mit Ultraschallwellensignalen beschickten Ultraschallmesskanals zumindest teilweise periodische Ausnehmungen aufweist, zwecks technischer Absorption von an dieser Oberfläche reflektierten bzw. gebeugten Ultraschallwellen.

Durch eine Oberflächengestaltung des Messkanals ist es möglich, die beiden Eigenschaften Reflexion und physikalische Absorption in einem Messkanal bestehend aus nur einem Werkstoff gleichzeitig zu erreichen. Unter dem hier eingeführten Begriff "technische Absorption" soll dabei im Rahmen der vorliegenden Erfindung nicht nur die klassische, physikalische Absorption im Sinne der energetischen Aufnahme einer Ultraschallwelle an einer Oberfläche umfasst sein, sondern auch das zielgerichtete zeitliche und/oder örtliche Verlassen eines Empfangsfensters bzw. eines Empfangsortes einer Ultraschallwelle aufgrund einer vielfachen, nicht zielgerichteten Reflexion.

Eine Ultraschallwelle, die aus Gründen der technischen Randbedingung einen Empfänger nicht mehr zum richtigen Zeitpunkt erreicht - das heisst nicht rechtzeitig ist- bzw. den Empfänger örtlich nicht mehr erreicht, gilt hier ebenso als technisch absorbiert, obwohl sie aus physikalischer Sicht noch vorhanden sein kann.

Grundlage dieser Definition ist eine technische Sichtweise, die den Sender als Datenquelle und den Empfänger als Datensenke bestimmt. Sämtliche Informationen, die die Datenquelle verlassen und die Datensenke örtlich nicht zum erwarteten Zeitpunkt erreichen, gelten als verloren. Dieses Verlorengehen ist im Sinne der vorliegenden Erfindung als "technische Absorption" definiert. Voraussetzung für den hier erzielten Dualismus aus Reflexion und physikalischer Absorption ist ein Werkstoff für die Oberfläche eines Messkanals, welcher Werkstoff als grundsätzliche Eigenschaft ein Reflexionsverhalten aufweist. Trotz dieser Reflexionseigenschaft wird erfindungsgemäss die technische Absorption mittels Oberflächengestaltung des Messkanals erreicht. Hierzu finden unter anderem die folgenden physikalischen Effekte Anwendung:
- Reflexion,
- Beugung und
- Brechung.

Kennzeichnend für die Erfindung sind periodische Strukturen, wobei die oben genannten physikalischen Effekte hervorgerufen werden. Wichtig bei der Auswahl der Strukturen ist der jeweilige Bezug zur Wellenlänge. Die Strukturen sollten geometrische Eigenschaften im Bereich der Wellenlänge des Ultraschalls im Medium aufweisen oder unterhalb dieser Wellenlänge, da an der Übergangsfläche vom Medium zum reflektierenden Metall die Wellenlänge des Schalls in dem Medium wirksam wird.

Typischerweise beträgt die Wellenlänge eines Ultraschallsignals mit einer Frequenz von 1250 Hz in Wasser etwa 1 mm. Erfindungsgemäss sind demzufolge Oberflächenstrukturen eines Messkanals vorgesehen, bei denen Ausnehmungen mit einer Tiefe von kleiner gleich 1 mm ausgeprägt sind.

Weiterhin sieht die Erfindung vor, dass der Messkanal an seiner dem fliessenden Medium zugewandten Oberfläche mit Ausnehmungen versehen ist, die im wesentlichen ringförmig ausgebildet sind und in Fliessrichtung des Mediums nebeneinander liegen. Die bevorzugteste Ausführungsform nebeneinander angeordneter ringförmiger Ausnehmungen stellt ein Gewinde dar, dass zudem einfach herstellbar ist.

Eine weitere Ausführungsvariante sieht Ausnehmungen im Messkanal vor, die im wesentlichen nutenförmig ausgebildet sind, und zwar im wesentlichen in Längsrichtung des Messkanals; diese nutförmigen Ausnehmungen können direkt parallel oder leicht schräg zur Messkanalachse angeordnet sein.

Die Ausnehmungen und die zwischen ihnen liegenden Erhebungen weisen erfindungsgemäss mit Vorteil eine sägezahnförmige, eine rechteckförmige, eine trapezförmige oder ein gerundete Kontur auf.

Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen die

Fig. 1: eine Schnittdarstellung einer bekannten Ultraschallmessanordnung mit einem Ultraschallmesskanal;

Fig. 2: eine Oberflächengestaltung des Ultraschallmesskanals;

Fig. 3: eine Variante der Oberflächengestaltung des Ultraschallmesskanals, und

Fig. 4a)-b) weitere Varianten der Oberflächengestaltung des Ultraschallmesskanals.

Wege zur Ausführung der Erfindung, gewerbliche Verwendbarkeit

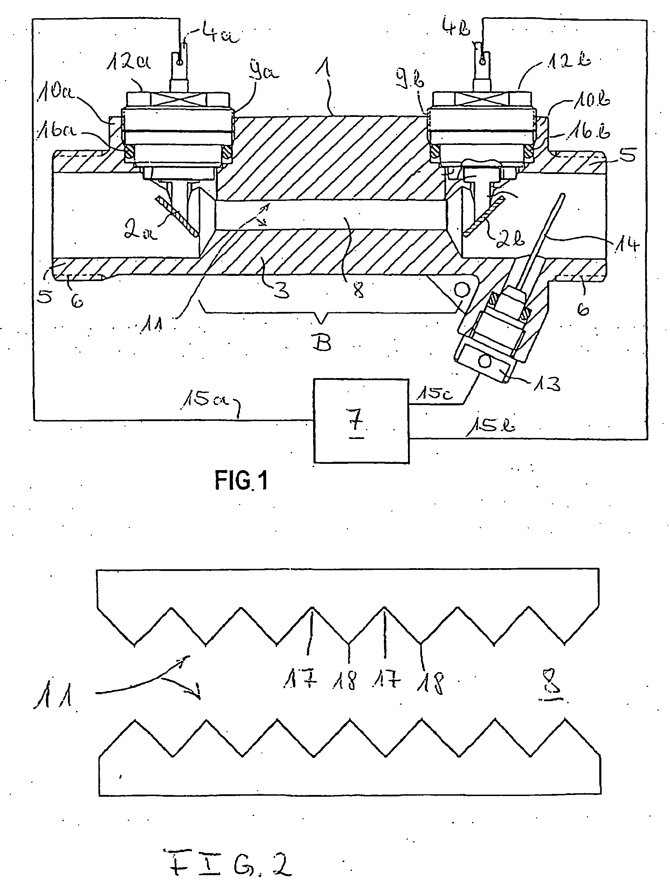

Fig. 1 zeigt einen Ultraschall-Durchflussmesser 1, der z. B. als Wasser- oder Wärmemengenzähler in Haushalten Verwendung findet. Prinzipiell sind auch industrielle Verwendungen, z. B. zur Durchflussmessung von sonstigen flüssigen oder gasförmigen Medien, insbesondere chemische Flüssigkeiten oder Gase, möglich. Der Ultraschall-Durchflussmesser 1 wird nachfolgend mit Durchflussmesser 1 bezeichnet. Der Durchflussmesser 1 umfasst zunächst ein Messrohr 3, das in eine nicht näher gezeigte Leitung einer Versorgungsanlage, z.B. einer Hauswasserversorgung, zwischengeschaltet wird. Er weist dazu endseitige Anschlussflansche 5 auf, die außenseitig mit Gewinden 6 versehen sind. Das Messrohr 3 weist innenseitig über den Bereich B eine Verengung seines Innenquerschnitts auf. Dieser von dem Medium zu durchströmende Bereich ist als Messkanal 8 bezeichnet. An den Enden des Messkanals 8 sind in der nicht näher bezeichneten Außenwand des Messrohres 3 zueinander beabstandete Flansche 10a und 10b angeordnet, in denen jeweils ein zugehöriger Ultraschallkopf 12a und 12b angeordnet ist. Die Ultraschallköpfe 12a und 12b können allgemein nach dem Stand der Technik ausgestaltet sein. Bevorzugt sind die Ultraschallköpfe 12a und 12b als sogenannte Topfwandler mit einem Metallgehäuse, insbesondere aus Messingwerkstoff, ausgeführt. Derartige Ultraschallköpfe (auch Schallsensoren genannt) sind beispielsweise aus der EP 0 679 874 und der EP 0 858 844 A2 bekannt.

Die Ultraschallköpfe 12a und 12b sind in ihren jeweiligen Flanschen 10a bzw. 10b bevorzugt mittels Gewinde 9a und 9b eingeschraubt. Zur zusätzlichen Abdichtung gegenüber dem Innenraum des Messrohres 1 kann ein Dichtring 16a bzw. 16b vorgesehen sein. Die nachfolgenden Ausführungen gelten für beide Ultraschallköpfe mit ihren jeweiligen Flanschen und Umlenkspiegeln sinngemäß.

Die Flansche 10a und 10b mit den dazugehörigen Ultraschallköpfen 12a bzw. 12b sind derart am Messrohr 1 befestigt, dass die Ultraschallköpfe 12a und 12b senkrecht zum durchfließenden Medium in das Innere des Messrohres 1 hineinschallen. Selbstverständlich sind die Ultraschallköpfe 12a und 12b über ihre jeweiligen Anschlussfahnen 4a und 4b und Leitungen 15a, 15b mit einer Verarbeitungseinrichtung 7 verbunden. Die Verarbeitungseinrichtung 7 dient dabei wie allgemein aus dem Stand der Technik bekannt zum Ansteuern der Ultraschallköpfe 12a, 12b und zum Auswerten ihrer Empfangssignale.

Beim Einsatz des Durchflussmessers 1 als Wärmemengenzähler kann zusätzlich auch ein Temperatursensor 13 vorgesehen sein, der ebenfalls mit der Verarbeitungseinrichtung 7 über eine Leitung 15c verbunden ist und mit seinem Fühlerende 14 in das Messrohr 3 und somit in den Mediumstrom hineinragt.

Zur Messung der Durchflussmenge wird, wie aus dem Stand der Technik allgemein bekannt, das Ultraschallsignal von einem der Ultraschallköpfe zum anderen und umgekehrt gesendet. Aus dem Laufzeitunterschied der Signale - mit und gegen den Mediumstrom -wird in der Verarbeitungseinrichtung 7 die Fließgeschwindigkeit ermittelt. Unter Berücksichtigung des Querschnitts der Messstrecke 8 kann dann rechnerisch die Durchflussmenge ermittelt werden.

Um das Ultraschallsignal von den Ultraschallköpfen 12a, 12b längs durch die Messstrecke 8 zu führen, wird es über Umlenkspiegel 2a und 2b umgelenkt. Eine dem strömenden Medium zugewandte Oberfläche 11 des Messkanals 8 weist eine erfindungsgemässe Struktur auf, die in den Fig. 2 bis Fig. 4 gezeigt und im Folgenden beschrieben ist. Um die Übersichtlichkeit der Fig. 1 nicht zu gefährden, ist diese Struktur der Oberfläche 11 hier nicht gezeigt.

Fig. 2 zeigt eine erfindungsgemässe Ausgestaltung der Oberfläche 11, bei der sägezahnförmige oder zickzackförmige Ringe in Fliessrichtung eines Mediums durch den Messkanal 8 nebeneinander angeordnet sind. Diese sägezahnförmigen oder zickzackförmige Ringe können -als Gewinde ausgebildetauf einfache Weise in dem Messkanal 8 eingebracht werden. Die sägezahnförmigen Ringe zeigen eine Anzahl regelmässig nebeneinander angegeordneter Ausnehmungen 17, die jeweils einer Erhebung 18 benachbart sind.

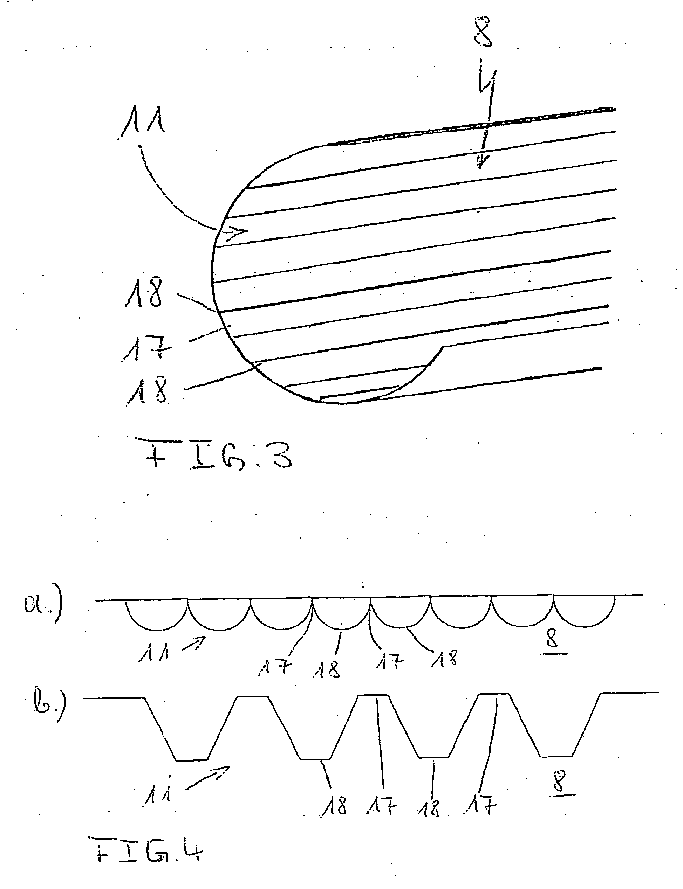

In einer aufgebrochenen, perspektivischen Darstellung zeigt die Fig. 3 einen Ausschnitt des Messkanals 8 mit im wesentlichen längs zur Fliessrichtung des Mediums regelmässig angeordnete Nuten, die analog zur Fig. 2 jeweils von Erhebungen 18 eingeschlossen werden. Diese Nuten verlaufen entweder parallel zu einer hier nicht näher gezeigten Zentralachse des Messkanals 8 oder schräg dazu.

Die Fig. 4a und Fig. 4b zeigen lediglich beispielhaft zwei weitere verschiedene Oberflächenkonturen der Oberfläche 11 des Messkanals 8. Dabei sind in Fig. 4a die regelmässig nebeneinander angeordneten Erhebungen 18 halbkreisförmig gerundet ausgeführt. In Fig. 4b weisen die regelmässigen Ausnehmungen 17 und die Erhebunben 18 jeweils annähernd Trapezform auf.

Ohne den erfinderischen Gedanken zu verlassen ist ebenfalls denkbar, die Oberfläche des Messkanals mit Ausnehmungen 17 und Erhebungen 18 zu versehen, so dass eine kombinierte Oberflächerikontur entsteht, das heisst, dass die Erhebungen 18 beispielsweise dreieckförmig ausgestaltet sind, wohingegen die benachbarten Ausnehmungen 17 gerundet sein können. Wichtig dabei ist, dass nicht nur regelmässige Anordnungen vom Erfindungsgedanken umfasst sind, sondern ebenfalls unregelmässige Ausgestaltungen, bei denen sich ringförmige Ausnehmungen 17 und längsgerichtete Nuten 19 entlang des Messkanals einander abwechseln. Auch hier ist jede Wahl der Oberflächenkontur, wie sie in den Fig. 2 bis Fig. 4 gezeigt sind, denkbar im Sinne der Erfindung. Eine weitere Variante ist darin zu sehen, dass der Messkanal 8 lediglich teilweise mit einer Oberflächenkontur versehen ist, wie sie oben erläutert und in den genannten Figuren beschrieben ist.

Des Weiteren umfasst die Erfindung jede Ausgestaltung der Ausnehmungen 17 bzw. der Nuten 19 hinsichtlich ihrer Tiefe. Wesentlich ist lediglich, dass die Tiefe der Ausnehmungen 17 bzw. der Nuten 19 in einem entsprechenden Verhältnis zur Wellenlänge der Ultraschallsignale stehen, die den Messkanal 8 durchschallen. Wenn das den Messkanal 8 durchströmende Medium Wasser ist, haben die Ultraschallsignale mit einer Frequenz von 1250 Hz eine Wellenlänge von 1mm. Die efindungsgemässen Ausnehmungen 17 sollten deshalb hinsichtlich ihrer Tiefe und ihres Abstands zueinander ebenfalls im Bereich dieser Wellenlänge ausgeführt sein. Denkbar wäre aber auch, dass benachbarte Ausnehmungen bzw. Nuten unterschiedlich tief sind bzw. unterschiedlich voneinander beabstandet sind.

Sendet der Ultraschallkopf 12a ein Ultraschallsignal aus, so wird dieses vom Umlenkspiegel 2a in den Messkanal 8 umgelenkt. Direkt parallel zu diesem Messkanal 8 verlaufende Anteile des Ultraschallsignals werden auf kürzestem Weg den Umlenkspiegel 2b erreichen und von diesem Umlenkspiegel 2b zum Ultraschallkopf 12b gelenkt. Da dieser Ultraschallsignalanteil den kürzest möglichen Weg zurücklegt, erreicht er sein Ziel -nämlich den zweiten Ultraschallkopf 12b- auch in kürzester Zeit.

Weitere Anteile des vom Ultraschallkopf 12a ausgesendeten Ultraschallsignals treffen innerhalb des Messkanals 8 auf dessen Oberfläche 11. Dabei werden diese Ultraschallsignalanteile reflektiert, gebrochen und gebeugt wie oben im Abschnitt "Darstellung der Erfindung" hinreichend beschrieben. Bei herkömmlichen, nahezu glatten Oberflächen von Messkanälen konnte dies zu einem unerwünschten, diffusen Empfangssignal am zweiten Ultraschallkopf 12b führen. Die erfindungsgemässe Ausgestaltung der Oberfläche 11 des Messkanals 8 nach obiger Beschreibung führt nun zu der gezielten technischen Absorption derjenigen Ultraschallsignalanteile, die auf die Oberfläche 11 treffen. Diese Signalanteile erreichen entweder den empfangenden Ultraschallkopf 12b zu spät, das heisst, ausserhalb eines definierten Messzeitfensters, oder sie gelangen gar nicht mehr bis zu diesem zweiten Ultraschallkopf 12b.

Mit der erfingungsgemässen Ausgestaltung der Oberfläche 11 eines Ultraschallmesskanals 8 wird erstmals das ihn durchströmende Ultraschallsignal in nutzbare Signalanteile mit kürzester Wegstrecke und unnutzbare Signalanteile, die technisch absorbiert werden aufgeteilt, ohne dass eine elektronische Filterung des empfangenden Ultraschallkopfes 12b für diese unnutzbaren Signalanteile vorgesehen und ausgelegt werden muss.

Die Erfindung gewinnt eine besondere Bedeutung, wenn der Messkanal in seiner Einsatzperiode verschmutzen sollte. Typischerweise kann ein Messkanal im Laufe seines Einsatzes Verschmutzungsschichten aufweisen, die 50µm und mehr dick sind. Dadurch dass die Oberfläche 11 des Messkanals 8 eine erfindungsgemässe Kontur aufweist, hat eine Verschmutzschutzschicht der genannten Dicke keinerlei Einfluss mehr, da die Oberflächenkontur unerwünschte Signalanteile beseitigt. Selbst bei einer Verschmutzung, die für sich allein genommen zu einem diffusen Ultraschallsignal führen kann, bleibt nun die eigentliche Durchflussmengenmessung mittels Ultraschall davon unberührt.

Bezugszeichenliste
- 1: Durchflussmesser
- 2a, 2b: Umlenkspiegel
- 3: Messrohr
- 4a, 4b: Anschlussfahne
- 5: Anschlussflansch
- 6: Gewinde
- 7: Verarbeitungseinrichtung
- 8: Messkanal
- 9a, 9b: Gewinde
- 10a, 10b: Flansch
- 11: Oberfläche des Messkanals 8
- 12a, 12b: Ultraschallkopf
- 13: Temperatursensor
- 14: Fühlerende
- 15a, 15b, 15c: Leitung
- 16a, 16b: Dichtring
- 17: Ausnehmung
- 18: Erhebung
- 19: Nut

## Patentansprüche

1. Ultraschallmesskanal (8) zur Durchflussmessung eines strömenden Mediums in einer Rohrleitung, bei dem die Fließgeschwindigkeit des Mediums nach dem Prinzip der Laufzeitdifferenzmessung durch innerhalb des Mediums reflektierte Ultraschallwellen erfassbar ist, **dadurch gekennzeichnet, dass** eine Oberfläche (11) des mit Ultraschallwellensignalen beschickten und von dem Medium durchströmten Ultraschallmesskanals (8) zumindest teilweise periodische Ausnehmungen (17) aufweist, zwecks technischer Absorption von an dieser Oberfläche (11) reflektierten bzw. gebeugten Ultraschallwellen, wobei die Ausnehmungen (17) eine Tiefe von höchstens gleich der Wellenlänge der Ultraschallwellen in dem Medium haben, die Ausnehmungen (17) im wesentlichen ringförmig ausgebildet sind und in Fliessrichtung des Mediums nebeneinander angeordnet sind, sowie im wesentlichen gewindeförmig ausgebildet sind.

2. Ultraschallmesskanal nach Anspruch 1, **dadurch gekennzeichnet, dass** die Ausnehmungen (17) und/oder die ihnen benachbarten Erhebungen (18) sägezahnförmig, rechteckförmig, trapezförmig oder gerundet ausgebildet sind.

## Claims

1. Ultrasound measuring channel (8) for measuring the flow rate of a flowing medium in a pipeline, in which the flow speed of the medium can be determined according to the principle of the running time difference measurement by ultrasound waves reflected inside the medium, **characterised in that** a surface (11) of the ultrasound measuring channel (8) charged with ultrasound wave signals and flowed through by the medium comprises at least partly periodic recesses (17), for the purpose of technical absorption of ultrasound waves reflected or bent on this surface (11), wherein the recesses (17) have a depth that is at most equal to the wavelength of the ultrasound waves in the medium, the recesses (17) are configured to be essentially annular and are arranged adjacent to one another in the flow direction of the medium and are configured to be essentially thread-like.

2. Ultrasound measuring channel according to claim 1, **characterised in that** the recesses (17) and/or the elevations (18) adjacent thereto are configured in the form of a saw tooth, rectangle, trapezium or are rounded.

## Revendications

1. Canal de mesure ultrasonique (8) pour la mesure du flux traversant d'un milieu s'écoulant dans une canalisation, où la vitesse d'écoulement du milieu peut être captée selon le principe de la mesure de la différence des temps d'écoulement des ondes ultrasonores réfléchies à l'intérieur du milieu, **caractérisé en ce qu'**une surface (11) du canal de mesure ultrasonore (8), sollicitée par des signaux d'ondes ultrasonores et traversée par le milieu, présente au moins partiellement des creux périodiques (17) à cause d'une absorption technique des ondes ultrasonores réfléchies, respectivement réfractées, sur cette surface (11), les creux (17) possédant une profondeur au maximum égale à la longueur d'onde des ondes ultrasonores dans le milieu, les creux 17) étant principalement sous forme circulaire et disposés l'un à côté de l'autre dans le sens de l'écoulement du milieu, de sorte que, dans l'ensemble, ils forment un filetage.

2. Canal de mesure ultrasonore selon la revendication 1 **caractérisé en ce que** les creux (17), et/ou les sommets (18) leur étant voisins, sont conçus en forme de dents de scie, en forme de rectangles, en forme de trapèze ou sont arrondis.
